# EUROPEAN PATENT APPLICATION

(11) **EP 4 350 041 A2**
(43) Date of publication of application: **10.04.2024**
(21) Application number: 23194922.3
(22) Date of filing: 01.09.2023
(51) Int. Cl.: C25B 1/04, C25B 9/23, C25B 9/77, C25B 11/02, C25B 11/032, C25B 11/052

(54) **MEMBRANE ELECTRODE ASSEMBLY, ELECTROCHEMICAL CELL, STACK, ELECTROLYZER, AND MANUFACTURING METHOD OF MEMBRANE ELECTRODE ASSEMBLY**

(30) Priority: 03.10.2022 JP 2022159824
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: NAKANO, Yoshihiko, Tokyo (JP); YOSHINAGA, Norihiro, Tokyo (JP)
(74) Representative: Marks & Clerk LLP

(57) **Abstract**

A membrane electrode assembly according to an embodiment includes a first diffusion layer; a second diffusion layer; an electrolyte membrane provided between the first diffusion layer and the second diffusion layer; a first catalyst layer provided between the first diffusion layer and the electrolyte membrane; and a second catalyst layer provided between the second diffusion layer and the electrolyte membrane, wherein the first diffusion layer includes a first surface facing the first catalyst layer, and the first surface includes a chamfered portion, and a second surface provided on an opposing side of the first surface, and the second surface includes a protrusion protruding from the side of the first surface toward the side of the second surface.

## Description

### CROSS-REFERENCE TO RELATED APPLICATION

This application is based upon and claims the benefit of priority from Japanese Patent Application No.2022-159824, filed on October 3, 2022, the entire contents of which are incorporated herein by reference.

### FIELD

Embodiments described herein relate generally to a membrane electrode assembly, an electrochemical cell, a stack, an electrolyzer, and a manufacturing method of the membrane electrode assembly.

### BACKGROUND

In recent years, research on electrochemical cells has actively been conducted. Among the electrochemical cell, for example, polymer electrolyte water electrolysis cells (PEMEC:Polymer Electrolyte Membrane Electrolysis Cell) are expected to be used as hydrogen-generation devices for large-scale energy-storage systems. In order to ensure sufficient durability and electrolytic characteristics, noble metal catalysts such as platinum (Pt) nanoparticle catalysts for the cathode of PEMEC and iridium (Ir) nanoparticle catalyst for the anode are commonly used. In addition, a method of obtaining hydrogen from ammonia has been studied.

### BRIEF DESCRIPTION OF THE DRAWINGS

FIG. 1 is a schematic cross-sectional view of the membrane electrode assembly of a first embodiment.
FIG. 2 is a schematic cross-sectional view of a first diffusion layer of the first embodiment.
FIG. 3 is a schematic top view of the first diffusion layer of the first embodiment.
FIG. 4 is a schematic bottom view of the first diffusion layer of the first embodiment.
FIGS. 5A-B are schematic diagrams illustrating a manufacturing method of the membrane electrode assembly according to the first embodiment.
FIG. 6 is a schematic diagram illustrating the manufacturing method of the membrane electrode assembly according to the first embodiment.
FIGS. 7A-B are schematic diagrams illustrating a manufacturing method of the membrane electrode assembly according to a comparative embodiment of the first embodiment.
FIG. 8 is a schematic diagram illustrating a process for manufacturing the membrane electrode assembly according to a comparative embodiment of the first embodiment.
FIG. 9 is a schematic cross-sectional view of the first diffusion layer of a second embodiment.
FIG. 10 is a schematic top view of the first diffusion layer of the second embodiment.
FIG. 11 is a schematic top view of the first diffusion layer of the second embodiment.
FIG. 12 is a schematic diagram of the electrochemical cell according to a third embodiment.
FIG. 13 is a schematic diagram of the stack according to a fourth embodiment.
FIG. 14 is a schematic diagram of the electrolyzer according to a fifth embodiment.

### DETAILED DESCRIPTION

A membrane electrode assembly according to an embodiment includes a first diffusion layer; a second diffusion layer; an electrolyte membrane provided between the first diffusion layer and the second diffusion layer; a first catalyst layer provided between the first diffusion layer and the electrolyte membrane; and a second catalyst layer provided between the second diffusion layer and the electrolyte membrane, wherein the first diffusion layer includes a first surface facing the first catalyst layer, and the first surface includes a chamfered portion, and a second surface provided on an opposing side of the first surface, and the second surface includes a protrusion protruding from the side of the first surface toward the side of the second surface.

Hereinafter, embodiments will be described with reference to the drawings. In the drawings, the same or similar parts are denoted by the same or similar reference numerals.

The physical property values herein are values at 25 [° C.] and at 1 [atom]. The thickness of each member is an average value of the distances in the lamination direction.

### (First Embodiment)

A membrane electrode assembly according to the present embodiment includes a first diffusion layer; a second diffusion layer; an electrolyte membrane provided between the first diffusion layer and the second diffusion layer; a first catalyst layer provided between the first diffusion layer and the electrolyte membrane; and a second catalyst layer provided between the second diffusion layer and the electrolyte membrane, wherein the first diffusion layer includes a first surface facing the first catalyst layer, and the first surface includes a chamfered portion, and a second surface provided on an opposing side of the first surface, and the second surface includes a protrusion protruding from the side of the first surface toward the side of the second surface.

Hereinafter, in the embodiment, the water electrolysis will be described as an example.

Note that the electrolyzer of the embodiment can be used for the electrolyzer of ammonia. The membrane electrode assembly of the embodiment can be used as the membrane electrode assembly of the electrolyzer for synthesizing ammonia. The electrolyzer of the embodiment is available for the electrolyzer used for the electrolysis of ammonia synthesis in which ultrapure water is supplied to the anode, the water is decomposed at the anode to produce proton and oxygen, the produced proton passes through the electrolyte membrane, and nitrogen supplied to the cathode, the proton and the electron are connected to produce ammonia.

It should be noted that the electrolyzer of the embodiment can be used in the electrolyzer in which ammonia is electrolyzed to produce hydrogen. The membrane electrode assembly 1 can be used in a device for electrolyzing ammonia to produce hydrogen. The electrolyzer is available for the electrolyzer used for electrolysis for ammonia decomposition in which ammonia is supplied to the cathode, ammonia is decomposed at the cathode to produce protons and nitrogen, produced protons pass through the electrolyte membrane, and protons and electrons are combined at the anode to produce hydrogen.

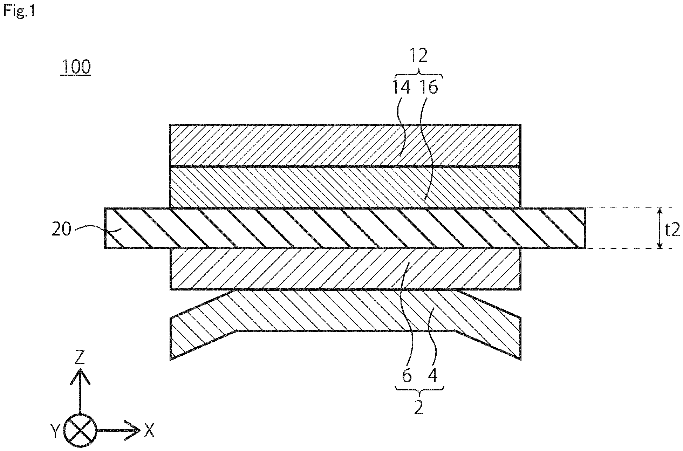

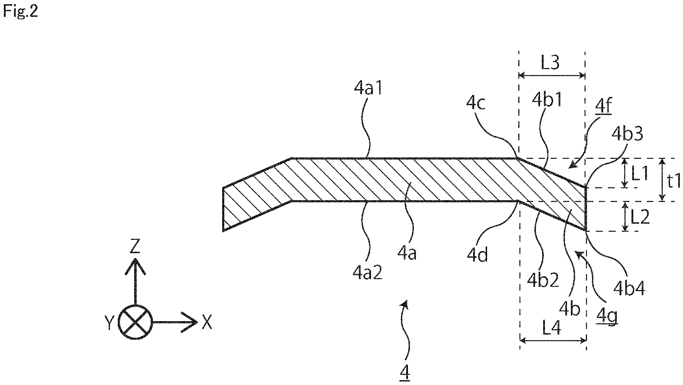

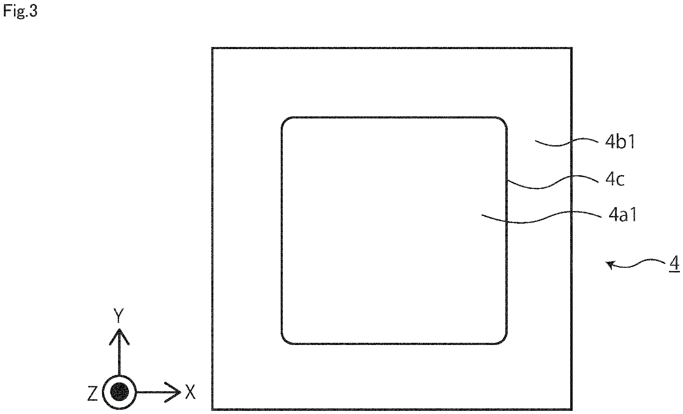

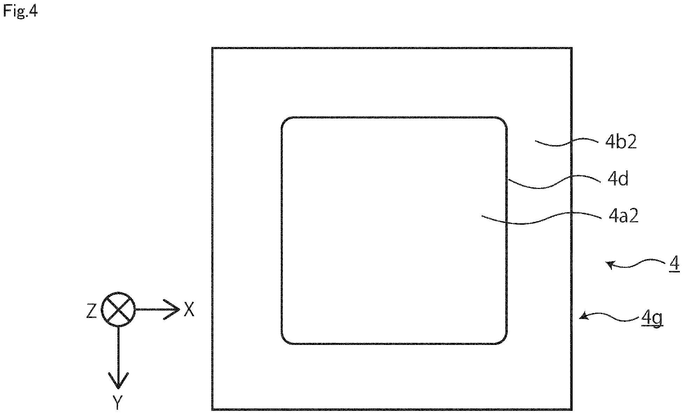

FIG. 1 is a schematic cross-sectional view of the membrane electrode assembly 100 according to the present embodiment. FIG. 2 is a schematic cross-sectional view of the first diffusion layer 4 of the present embodiment. FIG. 3 is a schematic top view of the first diffusion layer of the present embodiment. FIG. 4 is a schematic bottom view of the first diffusion layer of the present embodiment.

The membrane electrode assembly 100 of the present embodiment will be described with reference to FIGS. 1 to 4.

The membrane electrode assembly 100 includes a first electrode 2, a second electrode 12, and an electrolyte membrane 20.

The first electrode 2 is, for example, the anode electrode. The first electrode 2 has the first diffusion layer 4 and the first catalyst layer 6.

The second electrode 12 is, for example, the cathode electrode. The second electrode 12 includes the second diffusion layer 14 and the second catalyst layer 16.

The electrolyte membrane 20 is provided between the first diffusion layer 4 and the second diffusion layer 14. The first catalyst layer 6 is provided between the first diffusion layer 4 and the electrolyte membrane 20. The second catalyst layer 16 is provided between the second diffusion layer 14 and the second catalyst layer 16.

Here, the X-direction (X-axis), the Y-direction (Y-axis) intersecting perpendicularly to the X-direction (X-axis), and the Z-direction (Z-axis) intersecting perpendicularly to the X-direction (X-axis) and the Y-direction (Y-axis) are defined. The flattening portion 4a of the first diffusion layer 4, the electrolyte membrane 20, the second diffusion layer 14 of the second electrode 12, and the second catalyst layer 16 extend, for example, in the X-direction and the Y-direction. The flattening portion 4a of the first diffusion layer 4, the electrolyte membrane 20, the second diffusion layer 14 of the second electrode 12, and the second catalyst layer 16 extend, for example, in the X-direction and the Y-direction. The first electrode 2, the electrolyte membrane 20, and the second electrode 12 are stacked in the Z-direction, for example.

The first diffusion layer 4 is preferably porous and highly conductive. The first diffusion layer 4 is a porous member that passes through gases and fluids. The first diffusion layer 4 is, for example, a carbon paper or a metal mesh. As the metal mesh, a porous substrate of the valve metal is preferable. The porous substrate of the valve metal is preferably the porous substrate containing one or more metals selected from the group consisting of titanium, aluminum, tantalum, niobium, hafnium, zirconium, zinc, tungsten, bismuth, and antimony, or the porous substrate of one metal selected from the group consisting of titanium, aluminum, tantalum, niobium, hafnium, zirconium, zinc, tungsten, bismuth, and antimony.

It is particularly preferable that the first diffusion layer 4 of the present embodiment is a porous substrate of a titanium-containing valve metal. The standard of titanium of the first diffusion layer 4 is, for example, type 1 standard or type 2 standard of JIS(Japanese Industrial Standards) standards.

The first diffusion layer 4 has a first surface 4a1 facing the first catalyst layer 6 and having a chamfered portion 4f, and a protrusion 4g provided on an opposing side of the first surface 4a1 and protruding from the side of the first surface 4a1 toward the side of the second surface 4a2. Such first diffusion layer 4 is particularly preferably formed, for example, by performing the shear processing of the first diffusion layer 4, which is a titanium-containing porous substrate of the valve metal. The manufacturing process of the first diffusion layer 4 is not particularly limited to those described above.

In the present embodiment, as shown in FIG. 4, the protrusion 4g is provided around the second surface 4a2 so as to completely surround the second surface.

The film thickness t of the first diffusion layer 4 (the flattening portion 4a film thickness t) is preferably 100µm or more and 2000µm or less. If the thickness t of the first diffusion layer 4 (the thickness t of the flattening portion 4a) is less than 100µm, then the shapes of the first diffusion layer 4 are likely to have unintended distortion because they are too thin. On the other hand, if the film thickness t of the first diffusion layer 4 (the thickness t of the flattening portion 4a) is larger than 2000µm, the film thickness t is too thick, which makes it difficult to diffuse water/oxygen.

The flattening portion 4a has a first surface 4a1 facing the first catalyst layer 6 and a second surface 4a2 provided on an opposing side of the first surface 4a1. The first surface 4a1 is, for example, in direct contact with the first catalyst layer 6. A first connecting portion 4c is provided around the first surface 4a1. A second connecting portion 4d is provided around the second surface 4a2.

In a direction perpendicular to the first surface 4a1, the first distance L1 between the first end portion 4b3 of the third surface 4b1 and the first surface 4a1 is preferably 10% or more and 40% or less with respect to the film thickness t1 of the first diffusion layer 4 (the film thickness t1 of the flattening portion 4a). When the first distance L1 is less than 10% with respect to the film thickness t1 of the first diffusion layer 4 (the film thickness t1 of the flattening portion 4a), the electrolyte membrane 20 may be damaged by the first connecting portion 4c, and current concentration may occur in the membrane electrode assembly 100. On the other hand, when the first distance L1 is larger than 40% with respect to the film thickness t1 of the first diffusion layer 4 (the film thickness t1 of the flattening portion 4a), there is a possibility that the first electrode 2 is not successfully crimped to the electrolyte membrane 20 when the membrane electrode assembly 100 is formed by the thermocompression bonding.

In a direction perpendicular to the second surface 4a2, the second distance L2 between the second end portion 4b4 of the protrusion 4g of the fourth surface 4b2 and the second surface 4a2 is preferably 50% or less of the thickness t2 of the electrolyte membrane. If the second distance L2 is larger than 50% of the thickness t2 of the electrolyte membrane, when forming the membrane electrode assembly 100 by the thermocompression bonding, there is a possibility that the first electrode 2 is not successfully crimped to the electrolyte membrane 20.

In a direction parallel to the first surface 4a1, the third distance L3 between the first connecting portion 4c and the first end portion 4b3 is preferably 20% or more and 60% or less of the film thickness t1 of the first diffusion layer 4 (the film thickness t1 of the flattening portion 4a). If the third distance L3 is less than 20% of the film thickness t1 of the first diffusion layer 4 (the film thickness t1 of the flattening portion 4a), the electrolyte membrane 20 may be damaged by the first connecting portion 4c, and current concentration may occur in the membrane electrode assembly 100. On the other hand, if the third distance L3 is larger than 60% of the film thickness t1 of the first diffusion layer 4 (the film thickness t1 of the flattening portion 4a), when forming the membrane electrode assembly 100 by the thermocompression bonding, there is a possibility that the first electrode 2 is not successfully crimped to the electrolyte membrane 20.

In a direction parallel to the second surface 4a2, the fourth distance L4 between the second connecting portion 4d and the second end portion 4b4 is preferably 50% or less of the thickness t2 of the electrolyte membrane. If the fourth distance L4 is larger than 50% of the thickness of the electrolyte membrane, the first connecting portion 4c may damage the electrolyte membrane 20 and cause current concentration in the membrane electrode assembly 100.

The first distance L1, the second distance L2, the third distance L3, the fourth distance L4, and the like can be measured by observing, for example, an optical microscope. Here, the type of the optical microscope is not particularly limited, but, for example, a digital microscope VHX-2000 (manufactured by Keyence Corporation) can be used.

The first catalyst layer 6 includes catalyst metal or metal-oxide. Preferably, the first catalyst layer 6 includes a particle of catalyst metal or metal-oxide, wherein the catalyst metal is not supported on the carrier. The first catalyst layer 6 is preferably the porous catalyst layer. The catalyst metal or the metal-oxide are not particularly limited, and preferably contains, for example, one or more selected from the group consisting of Ir, Ru and Pt. The catalyst metal is preferably a metal, an alloy or a metal-oxide.

The metallic content per area of the first catalyst layer 6 is preferably 0.02[mg/cm2] or more and 1.0[mg/cm2] or less, more preferably 0.05[mg/cm2] or more and 0.5[mg/cm2] or less. The sum of the masses can be measured, for example, with a ICP mass spectrometer (Inductively Coupled Plasma-Mass Spectrometer:ICP-MS).

The film thickness of the first catalyst layer 6 is preferably 2µm or less. This is because when the thickness of the first catalyst layer 6 is 20µm or more, the gases generated in the first catalyst layer 6 may diffuse slowly, causing voltage-rise, and the catalyst layer and the electrolyte interface may be peeled off.

The porosity of the first catalyst layer 6 is preferably 10 [%] or more and 90 [%] or less, more preferably 30 [%] or more and 70 [%] or less.

The electrolyte membrane 20 is a proton-conducting membrane. The electrolyte membrane 20 is preferably a fluorine-based polymer or an aromatic hydrocarbon-based polymer having at least one or more selected from the group consisting of a sulfonate group, a sulfonimide group, and a sulfate group. The electrolyte membrane 20 is preferably a fluorine-based polymer having a sulfonate group. As the fluorine-based polymer including a sulfonic acid group, for example, Nafion (trademark, manufactured by DuPont Corporation), Flemion (trademark, manufactured by Asahi Kasei Co.), Selemion (trademark, manufactured by Asahi Kasei Co.), Aquavion (aquivion) (trademark, Solvay Specialty Polymers Co.), or Aciplex (trademark, manufactured by Asahi Glass Co.), etc. can be used.

The thickness of the electrolyte membrane 20 can be appropriately determined in view of properties such as permeation properties and durability of the membrane. From the viewpoint of strength, dissolution resistance, and power properties of the MEA, the thickness of the electrolyte membrane 20 is preferably 20 [µm] or more and 300 [µm] or less, more preferably 50 [µm] or more and 200 [µm] or less, and even more preferably 80 [µm] or more and 150 [µm] or less.

As the second diffusion layer 14, it is preferable to use a porous and highly conductive material. The second diffusion layer 14 is a porous member that passes through gases and fluids. The second diffusion layer 14 is, for example, the carbon paper or the metal mesh. As the metal mesh, a porous substrate of the valve metal is preferable. The porous substrate of the valve metal is preferably the porous substrate containing one or more metals selected from the group consisting of titanium, aluminum, tantalum, niobium, hafnium, zirconium, zinc, tungsten, bismuth, and antimony, or the porous substrate of one metal selected from the group consisting of titanium, aluminum, tantalum, niobium, hafnium, zirconium, zinc, tungsten, bismuth, and antimony.

The second catalyst layer 16 includes catalyst metal. The second catalyst layer 16 may include a particle of the catalyst metal, and the catalyst metal may be supported on the carrier. The second catalyst layer 16 is preferably the porous catalyst layer. The catalyst metal is not particularly limited, and includes, for example, one or more selected from the group consisting of Pt, Rh, Os, Ir, Pd and Au. It is preferable for the catalyst metal to include at least one selected from the group consisting of such catalyst materials.

The metallic content per area of the second catalyst layer 16 is preferably 0.02[mg/cm2] or more and 1.0[mg/cm2] or less, more preferably 0.05[mg/cm2] or more and 0.5[mg/cm2] or less. The sum of the masses can be measured, for example, with a ICP mass spectrometer (Inductively Coupled Plasma-Mass Spectrometer:ICP-MS).

The porosity of the second catalyst layer 16 is preferably 10 [%] or more and 90 [%] or less, and more preferably 30 [%] or more and 70 [%] or less.

Next, methods for manufacturing the membrane electrode assembly of the present embodiment will be described.

The membrane electrode assembly of the present embodiment is manufactured by performing a shear processing of a diffusion layer plate, forming a first diffusion layer including a first surface including a chamfered portion, a second surface provided on an opposing side of the first surface, and a protrusion connected to the second surface, the protrusion protruding from the side of the first surface toward the side of the second surface; and forming the membrane electrode assembly by performing a thermocompression bonding of the first surface of the first diffusion layer, an electrolyte membrane, and a first catalyst layer provided between the first surface and the electrolyte membrane.

The membrane electrode assembly of the present embodiment is further manufactured, wherein the membrane electrode assembly is formed by performing the thermocompression bonding of a second diffusion layer, the electrolyte membrane, and a second catalyst layer provided between the second diffusion layer and the electrolyte membrane.

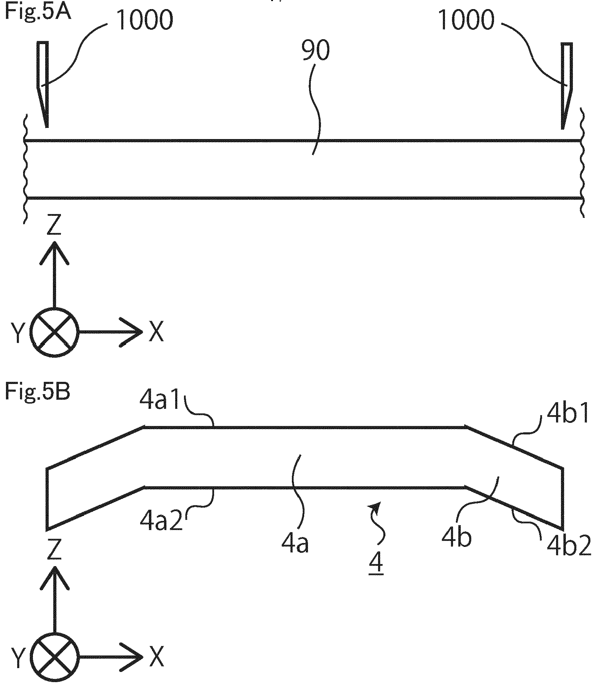

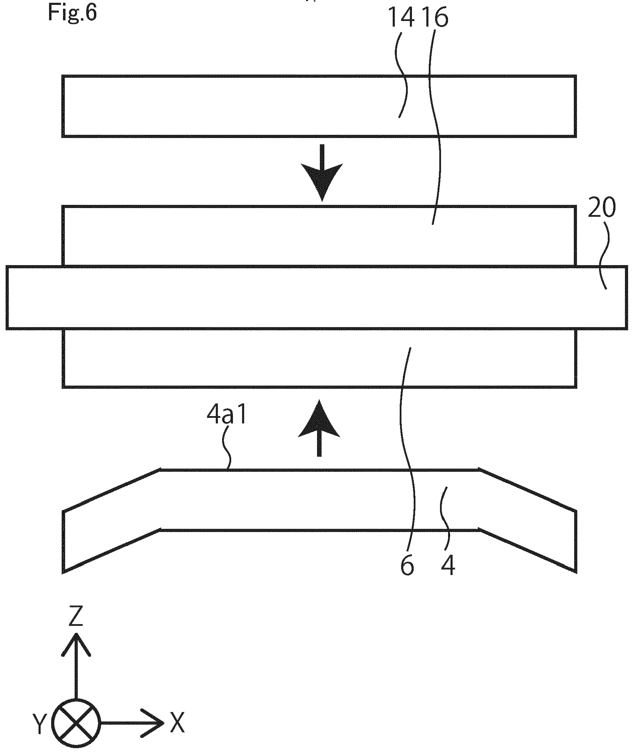

FIGS. 5A-B and FIG. 6 are schematic diagrams for explaining the manufacturing process of the membrane electrode assembly of the present embodiment.

First, the shear processing of the diffusion layer plate 90 is performed. The diffusion layer plate 90 is a plate material for obtaining the first diffusion layer 4. Here, the shear processing of the present embodiment can be preferably performed by, for example, the cutter 1000 (see FIG.5A). For example, the shear processing of the present embodiment can be performed by moving the cutter 1000 in -Z direction. It should be noted that the method and the instrument used in the shear processing of the present embodiment are not limited to the cutter 1000.

The first diffusion layer 4 obtained by the shear processing includes the first surface 4a1 including the chamfered portion 4f and facing the first catalyst layer 6, and the protrusion 4g provided on an opposing side of the first surface 4a1 and protruding from the side of the first surface 4a1 toward the side of the second surface 4a2. When the cutter 1000 moves in the -Z-direction, the diffusion layer plate 90 is cut. At this time, a force by which the diffusion layer plate 90 is bent in -Z direction is applied by the cutter 1000. As a result, the flexture 4b is formed (see 5B).

Next, the first thermocompression bonding of the first surface 4a1 of the first diffusion layer 4, the electrolyte membrane 20, and the first catalyst layer 6 is performed. In addition, the second thermocompression bonding of the second diffusion layer 14, the electrolyte membrane 20, and the second catalyst layer 16 is performed. The first thermocompression bonding and the second thermocompression bonding may be performed separately or simultaneously. The first catalyst layer 6 may be in contact with the electrolyte membrane 20 prior the first thermocompression bonding. The first catalyst layer 6 may be in contact with the first diffusion layer 4 prior to the first thermocompression bonding. The second catalyst layer 16 may be in contact with the electrolyte membrane 20 prior to the second thermocompression bonding. The second catalyst layer 16 may be in contact with the second diffusion layer 14 prior to the second thermocompression bonding.

In this way, the membrane electrode assembly 100 of the present embodiment is obtained.

Next, the operation and effect of the present embodiment will be described.

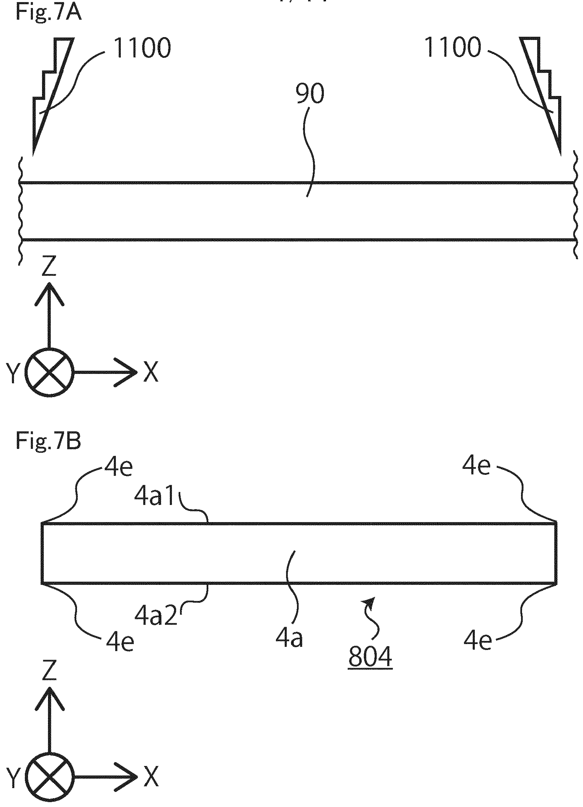

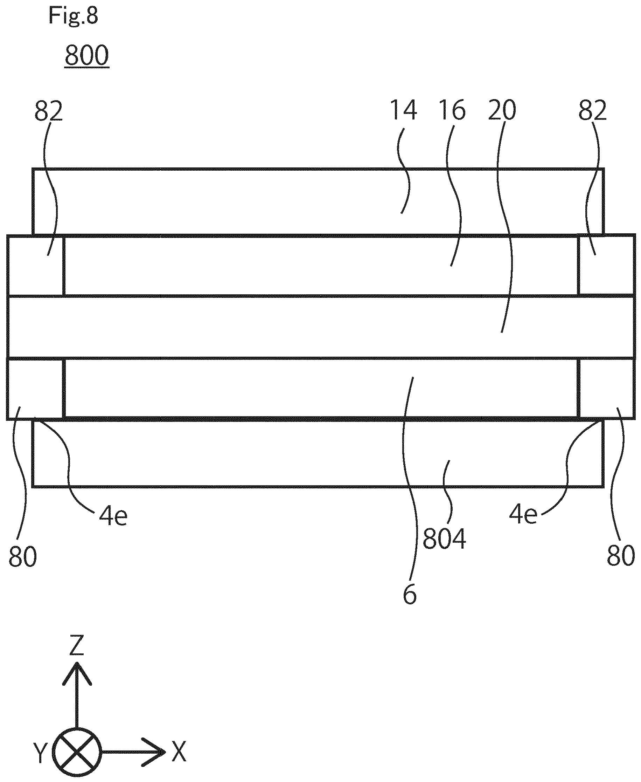

FIGS. 7A-B and FIG. 8 are schematic diagrams illustrating a manufacturing process of the membrane electrode assembly 800 as a comparative embodiment of the present invention.

In the comparative embodiment, the diffusion layer plate 90 is processed by lasers 1100 (FIG. 7A) to obtain the diffusion layer 804 (FIG. 7B). When the diffusion layer plate 90 is processed using the lasers 1100, a sharp-edged 4e is formed at the end of the diffusion layer 804. Processing by the lasers 1100 is used to facilitate processing when the diffusion layer 804 is the porous substrate of titanium-containing valve metal.

Next, as shown in FIG. 8, using the comparative diffusion layer 804 in the membrane electrode assembly 800 is considered. In order to protect the electrolyte membrane 20, the gasket 80 is provided around the first catalyst layer 6. The gasket 82 is provided around the second catalyst layer 16.

However, even when the gasket 80 is used, the electrolyte membrane 20 is damaged because 4e is sharp. Also, since the damaged part of the electrolyte membrane 20 has a higher electric conductivity when using the membrane electrode assembly having the damaged electrolyte membrane 20, current concentration is likely to occur. Therefore, the membrane electrode assembly having a long life cannot be obtained.

Therefore, the membrane electrode assembly of the present embodiment includes a first diffusion layer; a second diffusion layer; an electrolyte membrane provided between the first diffusion layer and the second diffusion layer; a first catalyst layer provided between the first diffusion layer and the electrolyte membrane; and a second catalyst layer provided between the second diffusion layer and the electrolyte membrane, wherein the first diffusion layer includes a first surface facing the first catalyst layer, and the first surface includes a chamfered portion, and a second surface provided on an opposing side of the first surface, and the second surface includes a protrusion protruding from the side of the first surface toward the side of the second surface.

As described above, since the protrusion 4g is provided, damage to the electrolyte membrane 20 is suppressed. Therefore, according to the membrane electrode assembly of the present embodiment, the membrane electrode assembly with a long life can be obtained. Further, according to the method of manufacturing the membrane electrode assembly according to the present embodiment, the membrane electrode assembly having a long life can be manufactured.

### (Second Embodiment)

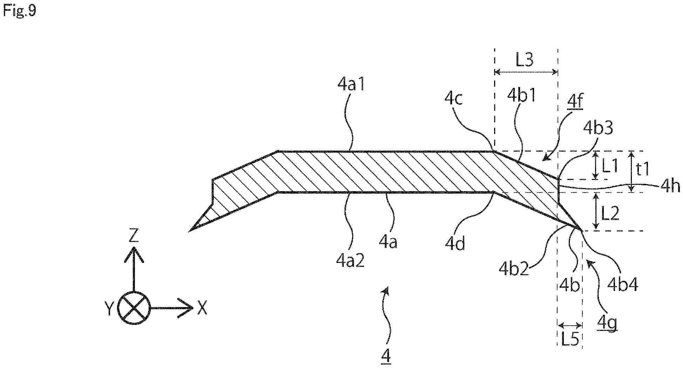

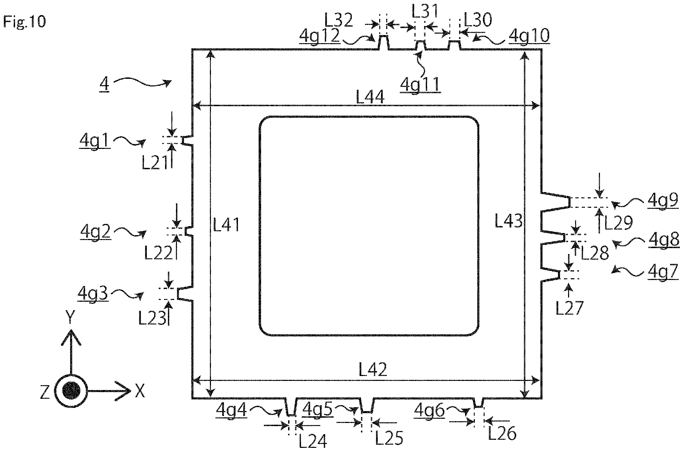

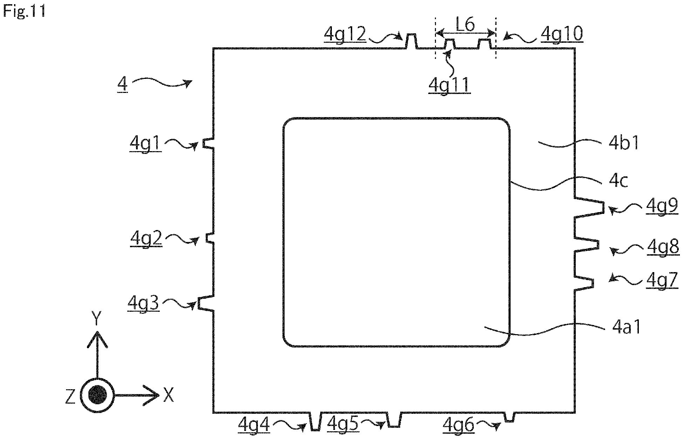

FIG. 9 is a schematic cross-sectional view of the first diffusion layer 4 of the present embodiment. FIG. 10 and FIG. 11 are schematic top views of the first diffusion layer 4 of the present embodiment.

The protrusions 4g1, 4g2, 4g3, 4g4, 4g5, 4g6, 4g7, 4g8, 4g9, 4g10, 4g11 and 4g12 are shown in FIG. 10. Such protrusions 4g can be formed when the diffusion layer plate 90 is processed with a water stream to obtain the first diffusion layer 4. For example, when the first electrode 2, the electrolyte membrane 20, and the second electrode 12 are stacked in the Z direction, the protrusion 4g of the present embodiment protrudes in -z direction.

The protrusion 4g is connected to the second surface 4a2 by the second connecting portion 4d.

In a direction parallel to the second surface 4a2, the fifth distance L5 between the side surface 4h of the first diffusion layer 4 and the second end portion 4b4 of the fourth surface 4b2 of the protrusion 4g is preferably 50% or less of the thickness t2 of the electrolyte membrane 20. If the fifth distance L5 is larger than 50% of the thickness of the electrolyte membrane, the first connector 4c may damage the electrolyte membrane 20 and cause current concentration in the membrane electrode assembly 100.

On the other hand, consider the case where there exists a protrusion 4g where in a direction parallel to the second surface 4a2, the fifth distance L5 between the side surface 4h of the first diffusion layer 4 and the second end portion 4b4 of the fourth surface 4b2 is 50% or more of the thickness of the electrolyte membrane 20. For example, in FIG. 10, it is assumed that all of the protrusion 4g1, 4g2, 4g3, 4g4, 4g5, 4g6, 4g7, 4g8, 4g9, 4g10, 4g11 and 4g12 are " the protrusions 4g in which the fifth distance L5 between the side surface 4h of the first diffusion layer 4 and the second end portion 4b4 of the fourth surface 4b2 is 50% or more of the film thickness of the electrolyte membrane 20". In this case, in a plane parallel to the first surface 4a1, in a direction parallel to the end of the first diffusion layer 4 to which each of the protrusion 4g is connected, the sum of the lengths of the protrusion 4g (in FIG. 10, corresponding to L21+L22+L23+L24+L25+L26+L27+L28+L29+L30+L31+L32) is preferably 10% or less of the sum of the lengths of the ends of the first diffusion layer 4 (in FIG. 10, corresponding to L41+L42+L43+L44). This is to prevent the electrolyte membrane 20 from being damaged and current concentration occurring in the membrane electrode assembly 100.

Further, as shown in FIG. 11, the number of the protrusions 4g (e.g. the protrusions 4g10 and 4g 11 in FIG.11) whose second distance L2 between the second end 4b4 of the protrusion 4g and the second surface 4a2 is 60µm or more and 100µm or less in a plane parallel to the second surface 4a2 is two or less per length L6=1mm parallel to the second surface 4a2.

According to the membrane electrode assembly of the present embodiment, the membrane electrode assembly with a long life can be obtained. Further, according to the method of manufacturing the membrane electrode assembly of the present embodiment, the membrane electrode assembly with a long life can be obtained.

### (Third Embodiment)

The electrochemical cell of the present embodiment is the electrochemical cell including the membrane electrode assembly of the first embodiment or the second embodiment. Here, descriptions of contents overlapping with those of the first embodiment and the second embodiment will be omitted.

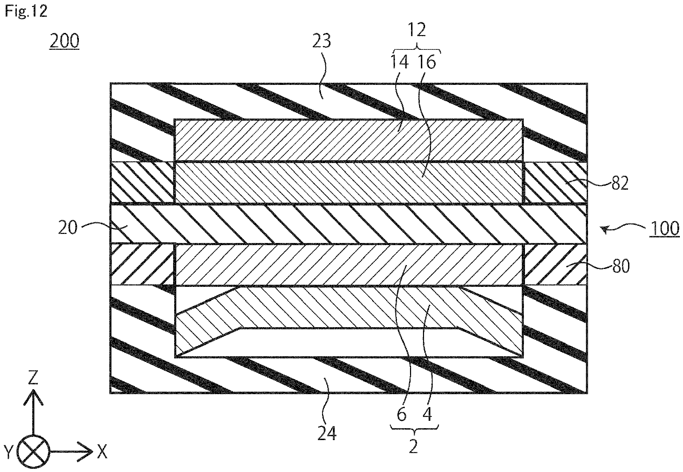

FIG. 12 is a schematic cross-sectional view of the electrochemical cell 200 according to the present embodiment. The electrochemical cell 200 will be described below using water electrolysis as an example, but hydrogen can be generated by decomposing ammonia or the like in addition to water.

The electrochemical cell 200 of the present embodiment includes the membrane electrode assembly 100, the separator 23, and the separator 24.

For example, water is supplied to the first electrode 2. In the first electrode 2, protons, oxygens, and electrons are generated from water. In the second electrode 12, the protons produced in the first electrode 2 react with electrons to produce hydrogen. One or both of the generated hydrogen and oxygen are used as fuel for a fuel cell, for example.

Here, using the separator 23 and the separator 24, the membrane electrode assembly 100 is tightened in the Z-direction and -Z direction. Here, when the diffusion layer 804, which is the comparative embodiment of the first embodiment, is used, the electrolyte membrane 20 is damaged when the edge 4e (for example, FIGS. 7 and 8) contacts the electrolyte membrane 20. Also, when using the membrane electrode assembly having the damaged electrolyte membrane 20, since the damaged part of the electrolyte membrane 20 has a higher electric conductivity, current concentration is likely to occur. Therefore, the electrochemical cell 200 having a long life cannot be obtained.

In particular, when the separator 23 and the separator 24 are used to tighten the membrane electrode assembly 100 in the Z direction and-Z direction, the tightening direction may deviate from the Z direction and-Z direction. In this case, since a non-uniform force is applied to the membrane electrode assembly 100, the electrolyte membrane 20 is damaged due to the edge 4e.

The electrochemical cell 200 of the present embodiment includes the membrane electrode assembly 100 having the first diffusion layer 4. Therefore, damage to the electrolyte membrane 20 is suppressed. Therefore, the electrochemical cell 200 having a long life can be obtained.

### (Fourth Embodiment)

A stack of the present embodiment is the stack including the membrane electrode assembly of the first embodiment or the second embodiment. Here, descriptions of contents overlapping with those of the first embodiment and the second embodiment will be omitted.

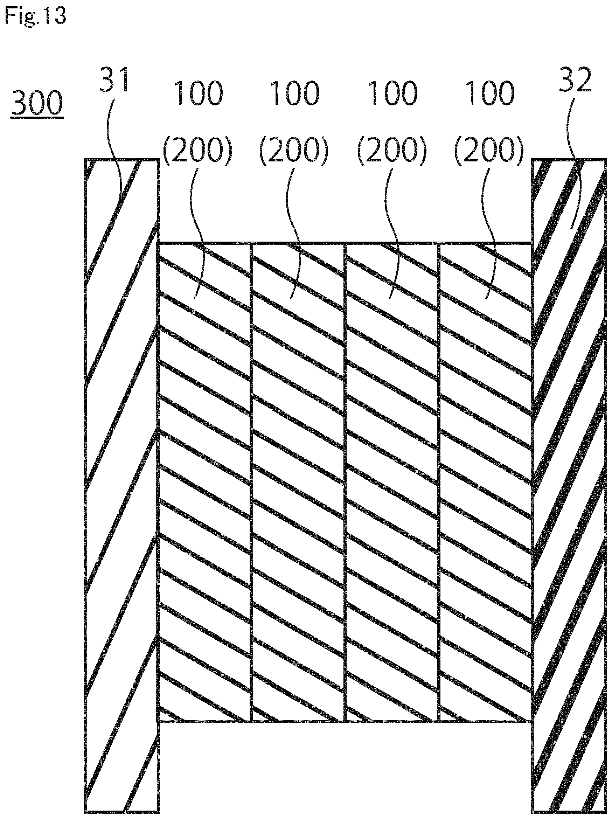

FIG. 13 is a schematic cross-sectional view showing the stack 300 of the present embodiment. The stack 300 includes a plurality of the membrane electrode assembly 100 or the electrochemical cell 200 connected in series. The clamping plate 31 and the clamping plate 32 are attached to either end of the membrane electrode assembly 100 or the electrochemical cell 200.

Here, when the diffusion layer 804, which is the comparative embodiment of the first embodiment, is used, the electrolyte membrane 20 is damaged when the edge 4e (for example, FIGS. 7 and 8) contacts the electrolyte membrane 20 by the clamping plate 31 and the clamping plate 32. Also, when using the membrane electrode assembly having the damaged electrolyte membrane 20, since the damaged part of the electrolyte membrane 20 has a higher electric conductivity, current concentration is likely to occur. Therefore, the stack 300 having a long life cannot be obtained.

The stack 300 of the present embodiment includes the membrane electrode assembly 100 including the first diffusion layer 4 or the electrochemical cell 200. Therefore, damage to the electrolyte membrane 20 is suppressed. Therefore, the stack 300 having a long life can be obtained.

### (Fourth Embodiment)

A fourth embodiment relates to the electrolyzer. Descriptions of the contents overlapping with those of the first to third embodiments will be omitted.

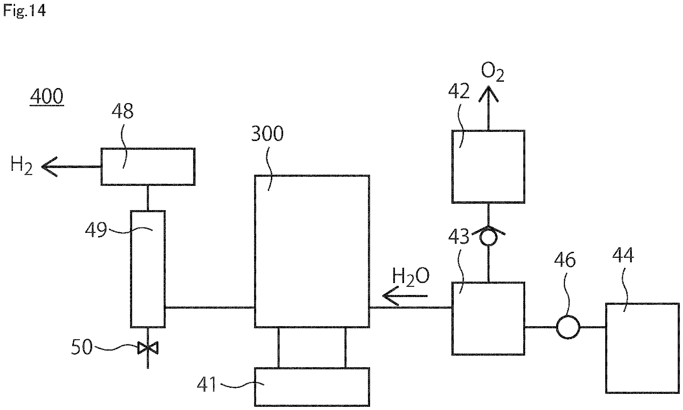

FIG. 14 is a schematic diagram of the electrolyzer 400 according to the present embodiment. The electrolyzer 400 is, for example, a hydrogen-generating device. The electrolyzer 400 includes the electrochemical cell 200 or the stack 300. The electrolyzer 400 is, for example, the electrolyzer for water electrolysis. For example, in the electrolyzer in which hydrogen is generated from ammonia, it is preferable to employ a device having a different configuration using the membrane electrode assembly 100.

The power supply 41 is attached to the stack 300. The power supply 41 applies a voltage to the stack 300. A gas-liquid separator 42 and a mixing tank 43 are connected to the anode-side of the stack 300 to separate the generated gases from the unreacted water. The mixing tank 43 is pumped by a pumping device 46 from an ion exchanged water producing apparatus 44 which supplies water. From the gas-liquid separator 42 through the check valve 47, the mixture is mixed at the mixing tank 43 and circulated to the anode.

Oxygen produced at the anode becomes oxygen gas after passing through the gas-liquid separator 42. On the other hand, a hydrogen purification device 49 connected to the gas-liquid separator 48 is used to produce high-purity hydrogen from the cathode. Impurities are discharged through a path having a valve 50 connected to the hydrogen purification device 49. In order to stably control the operating temperature, it is possible to heat the stack and the mixing tank and to control the current density at the time of thermal decomposition.

According to the electrolyzer 400 of the present embodiment, a long-life the electrolyzer 400 can be obtained.

### (Examples)

Hereinafter, Examples will be described.

### (Example 1-Example 8)

### Preparation of Anode (the first electrode 2)

A Ti nonwoven substrate sized 25[cm]×25[cm] and having a thickness of 200 [µm] was prepared as the diffusion layer plate 90. The diffusion layer plate 90 was sputtered with nickel/iridium by sputtering to form sheet layers. Then, only nickel was sputtered to form a gap layer. Laminated structure was obtained so that the step of forming the sheet layer and the gap layer was repeated 40 times so that Ir per area was 0.2[mg/cm2]. Subsequently, it was washed with sulfuric acid to obtain a nickel-removed catalytic structure (the first catalyst layer 6). The first diffusion layer 4 and the first catalyst layer 6 were then cut using a cutter. As a result, the first electrode 2 was obtained.

### Preparation of cathode (the second electrode 12)

The carbon paper Toray060 (manufactured by Toray Industries, Inc.) having a 25[cm]×25[cm] and a thickness of 190 [µm] was prepared as the second diffusion layer 14. On the second diffusion layer 14, the catalyst layer having a laminated structure including void layers was formed by a sputtering method so as to have a Pt (platinum)-catalyst loading-density 0.1[mg/cm2], and the catalyst layer having the porous catalyst layer was formed. This was cleaved to give the second electrode 12.

A Nafion115 of the electrolyte membrane 20 sized 30[cm]×30[cm] was used.

The first electrode 2, the second electrode 12 and the electrolyte membrane 20 described above were then placed in a hot press. Pressing was performed at 160[°C], 20[kg/cm2] for 3 minutes. Thereafter, press-cooling was performed at 25 [°C] and 20[kg/cm2] for 3 minutes. As a result, the membrane electrode assembly 100 was obtained.

Next, the membrane electrode assembly 100 was subjected to steady-state water electrolysis at 80 [°C] and a current density of 2 [A/cm2].

The anodes were fed with ultrapure water at flow rate of 0.05[L/min]. Then, the cell voltage (V1) after 24 hours of operation was measured. Compared to the pre-evaluation cell voltage (VC), the voltage rise rate (V1)/ (VC) was determined.

**[Table 1]**

| | FIRST DIFFUSION LAYER | | | | | ELECTROLYTE MEMBRANE | VOLTAGE RISE RATE | |
|---|---|---|---|---|---|---|---|---|
| | L1/t1 [%] | L 2 / t 2 [%] | L3/t1 [%] | L4/t2 [%] | t1 [*µ*m] | t2 [*µ*m] | | |
| Example 1 | 10% | 30% | 35% | 30% | 200 | 125 | 0.98 | note : L1/t1 |
| Example 2 | 25% | 30% | 35% | 30% | 200 | 125 | 0.99 | note : L1/t1 |
| Example 3 | 40% | 30% | 35% | 30% | 200 | 125 | 0.95 | note : L1/t1 |
| Example 4 | 25% | 10% | 35% | 30% | 200 | 125 | 0.93 | note : L2/t2 |
| Example 5 | 25% | 50% | 35% | 30% | 200 | 125 | 0.92 | note : L2/t2 |
| Example 6 | 25% | 30% | 20% | 30% | 200 | 125 | 0.96 | note : L3/t1 |
| Example 7 | 25% | 30% | 60% | 30% | 200 | 125 | 0.92 | note : L3/t1 |
| Example 8 | 25% | 30% | 35% | 50% | 200 | 125 | 0.97 | note : L4/t 2 |
| Comparative Example 1 | 5% | 30% | 35% | 30% | 200 | 125 | Crimp failure | note : L1/t1 |
| Comparative Example 2 | 45% | 30% | 35% | 30% | 200 | 125 | Current concentration | note : L1/t1 |
| Comparative Example 3 | 25% | 60% | 35% | 30% | 200 | 125 | Current concentration | note : L2/t2 |
| Comparative Example 4 | 25% | 30% | 10% | 30% | 200 | 125 | Current concentration | note : L3/t1 |
| Comparative Example 5 | 25% | 30% | 70% | 30% | 200 | 125 | Crimp failure | note : L3/t1 |
| Comparative Example 6 | 25% | 30% | 35% | 60% | 200 | 125 | Crimp failure | note : L4/t 2 |

As shown in Table 1, in Examples 1 to 8, since the voltage rise rate was low, good results were obtained.

On the other hand, in Comparative Example 1, Comparative Example 5, and Comparative Example 6, a crimp failure occurred between the first electrode 2 and the electrolyte membrane 20. Therefore, the steady operation of the water electrolysis could not be performed.

In Comparative Example 2, Comparative Example 3, and Comparative Example 4, the electrolyte membrane 20 was damaged and current concentration occurred. Therefore, the steady operation of the water electrolysis for 24 hours could not be performed.

### (Example 9-Example 12)

The same procedure as above was performed except that the first diffusion layer 4 and the first catalyst layer 6 were cut with a water stream.

**[Table 2]**

| | FIRST DIFFUSION LAYER | | ELECTROLYTE MEMBRANE | VOLTAGE RISE RATE |
|---|---|---|---|---|
| | L5/t2 [%] | Number of Protrusion [per c mJ | t2 [*µ*m] | |
| Example 9 | 10% | 2 | 125 | 0.98 |
| Example 10 | 25% | 2 | 125 | 0.99 |
| Example 11 | 50% | 2 | 125 | 0.95 |
| Example 12 | 25% | 1 | 125 | 0.93 |
| Comparative Example 7 | 60% | 2 | 125 | Current concentration |
| Comparative Example 8 | 25% | 3 | 125 | Current concentration |

the water electrolysis for 24 hours could not be performed.

While certain embodiments have been described, these embodiments have been presented by way of example only, and are not intended to limit the scope of the inventions. Indeed, the membrane electrode assembly, an electrochemical cell, a stack, an electrolyzer, and a manufacturing method of the membrane electrode assembly described herein may be embodied in a variety of other forms; furthermore, various omissions, substitutions and changes in the form of the devices and methods described herein may be made without departing from the spirit of the inventions. The accompanying claims and their equivalents are intended to cover such forms or modifications as would fall within the scope and spirit of the inventions.

The above-described embodiments can be summarized in the following technical proposals.

### (Technical proposal 1)

A membrane electrode assembly including:
a first diffusion layer;
a second diffusion layer;
an electrolyte membrane provided between the first diffusion layer and the second diffusion layer;
a first catalyst layer provided between the first diffusion layer and the electrolyte membrane; and
a second catalyst layer provided between the second diffusion layer and the electrolyte membrane, wherein
the first diffusion layer includes
   a first surface facing the first catalyst layer, and the first surface includes a chamfered portion, and
   a second surface provided on an opposing side of the first surface, and the second surface includes a protrusion protruding from the side of the first surface toward the side of the second surface.

### (Technical proposal 2)

The membrane electrode assembly according to technical proposal 1,
wherein the chamfered portion includes a third surface connected to the first surface by the first connecting portion,
and wherein, in a direction perpendicular to the first surface, a first distance L1 between a first end portion of the third surface and the first surface is 10% or more and 40% or less with respect to a thickness t1 of the first diffusion layer.

### (Technical proposal 3)

The membrane electrode assembly according to technical proposal 1 or 2,
wherein, in a direction perpendicular to the second surface, a second distance L2 between a second end portion of the protrusion and the second surface is 50% or less of a film thickness t2 of the electrolyte membrane.

### (Technical proposal 4)

The membrane electrode assembly according to any one of technical proposals 1 to 3,
wherein the chamfered portion includes the third surface connected to the first surface by a first connecting portion,
and wherein, in a direction parallel to the first surface, a third distance L3 between the first connecting portion and the first end portion of the third surface is 20% or more and 60% or less with respect to a thickness t1 of the first diffusion layer.

### (Technical proposal 5)

The membrane electrode assembly according to any one of technical proposals 1 to 4,
wherein the protrusion is connected to the second surface by a second connecting portion,
and wherein, in a direction parallel to the second surface, a fourth distance L4 between the second connecting portion and a second end portion of the protrusion is 50% or less of a film thickness t2 of the electrolyte membrane.

### (Technical proposal 6)

The membrane electrode assembly according to any one of technical proposals 1 to 5,
wherein the protrusion is connected to the second surface by the second connecting portion,
and wherein, in a direction parallel to the second surface, a fifth distance L5 between a side surface of the first diffusion layer and the second end portion of the protrusion is 50% or less of a film thickness t2 of the electrolyte membrane.

### (Technical proposal 7)

The membrane electrode assembly according to any one of technical proposals 1 to 6,
wherein the first diffusion layer includes titanium.

### (Technical proposal 8)

The membrane electrode assembly according to any one of technical proposals 1 to 7,
wherein the protrusion is provided around the second surface,

### (Technical proposal 9)

The membrane electrode assembly according to any one of technical proposals 1 to 8,
wherein the second surface includes a plurality of the protrusions.

### (Technical proposal 10)

The membrane electrode assembly according to technical proposal 9,
wherein, in a plane perpendicular to the second surface, a number of the protrusions whose second distance L2 between a second end portion of the protrusion and the second surface in a plane parallel to the second surface is 60µm or more and 100µm or less is two or less per length 1mm .

### (Technical proposal 11)

An electrochemical cell including the membrane electrode assembly according to any one of technical proposals 1 to 10.

### (Technical proposal 12)

A stack including the membrane electrode assembly according to any one of technical proposals 1 to 10.

### (Technical proposal 13)

An electrolyzer including the membrane electrode assembly according to any one of technical proposals 1 to 10.

### (Technical proposal 14)

A method of manufacturing a membrane electrode assembly, including:
by performing a shear processing of a diffusion layer plate, forming a first diffusion layer including
   a first surface including a chamfered portion,
   a second surface provided on an opposing side of the first surface, and
   a protrusion connected to the second surface, the protrusion protruding from the side of the first surface toward the side of the second surface; and
forming the membrane electrode assembly by performing a thermocompression bonding of the first surface of the first diffusion layer, an electrolyte membrane, and a first catalyst layer provided between the first surface and the electrolyte membrane.

### (Technical proposal 15)

The method of manufacturing the membrane electrode assembly according to technical proposal 14,
wherein the membrane electrode assembly is formed by performing the thermocompression bonding of a second diffusion layer, the electrolyte membrane, and a second catalyst layer provided between the second diffusion layer and the electrolyte membrane.

## Claims

1. A membrane electrode assembly comprising:
a first diffusion layer;
a second diffusion layer;
an electrolyte membrane provided between the first diffusion layer and the second diffusion layer;
a first catalyst layer provided between the first diffusion layer and the electrolyte membrane; and
a second catalyst layer provided between the second diffusion layer and the electrolyte membrane, wherein
the first diffusion layer includes
a first surface facing the first catalyst layer, and the first surface includes a chamfered portion, and
a second surface provided on an opposing side of the first surface, and the second surface includes a protrusion protruding from the side of the first surface toward the side of the second surface.

2. The membrane electrode assembly according to claim 1,
wherein the chamfered portion includes a third surface connected to the first surface by the first connecting portion,
and wherein, in a direction perpendicular to the first surface, a first distance L1 between a first end portion of the third surface and the first surface is 10% or more and 40% or less with respect to a thickness t1 of the first diffusion layer.

3. The membrane electrode assembly according to claim 1 or 2,
wherein, in a direction perpendicular to the second surface, a second distance L2 between a second end portion of the protrusion and the second surface is 50% or less of a film thickness t2 of the electrolyte membrane.

4. The membrane electrode assembly according to any one of claims 1 to 3,
wherein the chamfered portion includes the third surface connected to the first surface by a first connecting portion,
and wherein, in a direction parallel to the first surface, a third distance L3 between the first connecting portion and the first end portion of the third surface is 20% or more and 60% or less with respect to a thickness t1 of the first diffusion layer.

5. The membrane electrode assembly according to any one of claims 1 to 4,
wherein the protrusion is connected to the second surface by a second connecting portion,
and wherein, in a direction parallel to the second surface, a fourth distance L4 between the second connecting portion and a second end portion of the protrusion is 50% or less of a film thickness t2 of the electrolyte membrane.

6. The membrane electrode assembly according to any one of claims 1 to 5,
wherein the protrusion is connected to the second surface by the second connecting portion,
and wherein, in a direction parallel to the second surface, a fifth distance L5 between a side surface of the first diffusion layer and the second end portion of the protrusion is 50% or less of a film thickness t2 of the electrolyte membrane.

7. The membrane electrode assembly according to any one of claims 1 to 6,
wherein the first diffusion layer includes titanium.

8. The membrane electrode assembly according to any one of claims 1 to 7,
wherein the protrusion is provided around the second surface,

9. The membrane electrode assembly according to any one of claims 1 to 8,
wherein the second surface includes a plurality of the protrusions.

10. The membrane electrode assembly according to claim 9,
wherein, in a plane perpendicular to the second surface, a number of the protrusions whose second distance L2 between a second end portion of the protrusion and the second surface in a plane parallel to the second surface is 60µm or more and 100µm or less is two or less per length 1mm .

11. An electrochemical cell including the membrane electrode assembly according to any one of claims 1 to 10.

12. A stack including the membrane electrode assembly according to any one of claims 1 to 10.

13. An electrolyzer including the membrane electrode assembly according to any one of claims 1 to 10.

14. A method of manufacturing a membrane electrode assembly, comprising:
by performing a shear processing of a diffusion layer plate, forming a first diffusion layer including
a first surface including a chamfered portion,
a second surface provided on an opposing side of the first surface, and
a protrusion connected to the second surface, the protrusion protruding from the side of the first surface toward the side of the second surface; and
forming the membrane electrode assembly by performing a thermocompression bonding of the first surface of the first diffusion layer, an electrolyte membrane, and a first catalyst layer provided between the first surface and the electrolyte membrane.

15. The method of manufacturing the membrane electrode assembly according to claim 14,
wherein the membrane electrode assembly is formed by performing the thermocompression bonding of a second diffusion layer, the electrolyte membrane, and a second catalyst layer provided between the second diffusion layer and the electrolyte membrane.
